# EUROPÄISCHE PATENTSCHRIFT

(11) **EP 3 911 529 B1**
(45) Veröffentlichungstag und Bekanntmachung des Hinweises auf die Patenterteilung: **28.01.2026**
(21) Anmeldenummer: 19827630.5
(22) Anmeldetag: 04.12.2019
(51) Int. Cl.: B60J 7/00, B62D 25/06

(54) **DACHMODUL MIT SENSORIK FÜR EIN AUTONOM BZW. TEILAUTONOM FAHRENDEN KRAFTFAHRZEUG , UMFASSEND DACHÖFFNUNGSSYSTEM UND/ODER FESDTDACHELEMENT.**
ROOF MODULE WITH SENSORS FOR AN AUTONOMOUS OR PART AUTONOMOUS VEHICLE, COMPRISING A SUN ROOF OPENING SYSTEM AND/OR FIXED ROOF ELEMENT.
MODULE DE TOIT AVEC DES CAPTEURS POUR UN AUTONOME OU PART-AUTONOME VÉHICULE AVEC SYSTÈME D'OUVERTURE DE TOIT ET/OU ÉLÉMENT DE TOIT FIXE.

(30) Priorität: 19.08.2019 DE 102019122193
(43) Veröffentlichungstag der Anmeldung: 24.11.2021
(73) Patentinhaber: Webasto SE, 82131 Stockdorf (DE)
(72) Erfinder: HUELSEN, Michael, 82131 Stockdorf (DE); THANNHEIMER, Johannes, 82131 Stockdorf (DE); LEGLER, Dirk, 82131 Stockdorf (DE); HUBER, Max, 82131 Stockdorf (DE); LINDNER, Thomas, 82131 Stockdorf (DE); DEPPE, Michael, 82131 Stockdorf (DE); RUDOLPH, Thomas, 82131 Stockdorf (DE); LANGLAIS, Cedric, 82131 Stockdorf (DE); MAILHAMER, Michael, 82131 Stockdorf (DE); LEHOTSKY, Juraj, 82131 Stockdorf (DE); HOLZWARTH, Achim, 82131 Stockdorf (DE); RESPONDEK, Michael, 82131 Stockdorf (DE)
(74) Vertreter: advotec.
(86) Internationale Anmeldenummer: PCT/EP2019/083672
(87) Internationale Veröffentlichungsnummer: WO 2021/032312

(56) Entgegenhaltungen:
- EP-A1- 2 860 820
- DE-A1- 102005 035 427
- DE-A1- 102016 123 752
- JP-A- 2015 107 764
- US-A1- 2016 297 482
- US-A1- 2017 369 003
- US-A1- 2018 037 267
- US-A1- 2018 145 402
- US-A1- 2019 003 895
- US-A1- 2019 210 436
- ANONYMOUS: "VW Cedric, The Future Car! Without Steering Wheel, Pedals and Cockpit - AutocarWeek.com", 19 March 2017 (2017-03-19), autocarweek, XP055686927, Retrieved from the Internet <URL:https://autocarweek.com/vw-cedric/> [retrieved on 20200417]

## Beschreibung

Die Erfindung betrifft ein Dachmodul für ein Kraftfahrzeug, insbesondere für einen Personenkraftwagen, umfassend die Merkmale des Oberbegriffs des Patentanspruchs 1.

Ein derartiges Dachmodul ist aus der Praxis bekannt und stellt insbesondere bei einem Personenkraftwagen ein Fahrzeugdach dar, das als separates Bauteil auf eine einen Fahrzeugrohbau bildende Fahrzeugkarosserie aufsetzbar ist. Hierbei kann das Dachmodul als reines Festdach ausgebildet sein, das zur Ausbildung eines Panoramadachs einen transparenten Abschnitt aufweist, der einen Durchsichtsbereich bildet. Das Festdach ist in der Montagestellung des Dachmoduls, das heißt im mit der Fahrzeugkarosserie bzw. dem Fahrzeugrohbau verbundenen Zustand des Dachmoduls fest bzw. unbeweglich gegenüber der Fahrzeugkarosserie angeordnet. Alternativ oder zusätzlich kann das Dachmodul ein Dachöffnungssystem aufweisen, welches ein verstellbares Deckelelement umfasst, mittels dessen eine Dachöffnung wahlweise geöffnet oder geschlossen werden kann. Zudem umfasst das Dachmodul stets eine Dachhaut, welche die eine äußere Sichtfläche des Dachmoduls bildet und zur Ausbildung des Durchsichtsbereichs am Festdachelement abschnittsweise transparent ausgeführt ist und bei einem Dachmodul mit Dachöffnungssystem bis an die Dachöffnung heranreichen kann.

Des Weiteren ist es bekannt, an Fahrzeugdächern Sensormodule anzuordnen, die ein autonomes bzw. teilautonomes Fahren des betreffenden Kraftfahrzeuges ermöglichen. Diese Sensormodule umfassen Umfeldsensoren, mittels derer eine Fahrzeugumgebung überwacht und erfasst werden kann. Bisher sind die Sensormodule auf das Fahrzeugdach aufgesetzt, da das Fahrzeugdach in der Regel die höchste Erhebung eines Fahrzeugs ist, von der aus die Fahrzeugumgebung gut einsehbar ist. Die als Aufsatz ausgebildeten Sensormodule führen aber zu einem Fahrzeugerscheinungsbild, das in der Regel nicht den Kundenanforderungen genügt.

Aus der Druckschrift US 2018/0145402 A1 ist ein Fahrzeugdach bekannt, das als Einsatz bzw. Modul mit einem Fahrzeugrohbau verbunden werden kann. Dieses Fahrzeugdach umfasst eine Dachhaut, die an eine Dachunterkonstruktion angebunden ist, die als Dachrahmen aufgefasst werden kann. Die Dachhaut ist aus mehreren Elementen gebildet, von denen zumindest eines ein verstellbares Deckelelement bildet.

Aus der Druckschrift JP 2015-107764 ist ein Fahrzeugdach bekannt, das eine Dachhaut aufweist, das einen rahmenartigen Nichtdurchsichtsbereich aufweist, der einen Durchsichtsbereich umschließt. Des Weiteren ist eine Kamera vorgesehen, die zur Erfassung eines Fahrzeugumfelds genutzt werden kann. Zudem umfasst der Fahrzeugaufbau einen karosseriefesten Querträger.

Der Erfindung liegt die Aufgabe zugrunde, ein Dachmodul für ein Kraftfahrzeug, insbesondere ein Dachmodul für einen Personenkraftwagen zu schaffen, das in integrierter Weise zur Nutzung an einem autonom bzw. teilautonom fahrenden Kraftfahrzeug geeignet ist und gleichzeitig hohen optischen Ansprüchen genügt.

Diese Aufgabe ist erfindungsgemäß durch das Dachmodul mit den Merkmalen des Patentanspruchs 1 gelöst.

Gemäß der Erfindung wird also ein Dachmodul vorgeschlagen, das einerseits ein Dachöffnungssystem mit einem Deckelelement zum wahlweisen Öffnen oder Verschließen einer Dachöffnung und/oder ein Festdachelement mit einem transparenten Durchsichtsbereich aufweist und bei dem andererseits in integrierter Weise ein Sensormodul mit mindestens einem Umfeldsensor vorgesehen ist, der die Dachöffnung bzw. den transparenten Durchsichtsbereich nicht abschattet bzw. verdeckt und der durch das Blendenelement, das Bestandteil der Dachhaut ist, in optisch ansprechender Weise von dem Dachmodul aufgenommen sein kann.

Mit der Erfindung wird ein Sensordach bzw. Roof Sensor Module (RSM) bereitgestellt, das sowohl das autonome bzw. teilautonome Fahren des betreffenden Fahrzeugs ermöglicht als auch mit einem transparenten Festdachabschnitt und/oder einem öffenbaren Dachabschnitt versehen ist. Insbesondere durch Auslegung des Blendenelements kann die Dachhaut in optisch ansprechender Weise an die Kundenanforderungen angepasst werden. Im autonomen Fahrmodus fährt das betreffende Fahrzeug selbständig zumindest ohne wesentliche Eingriffe eines Fahrers. Im teilautonomen Fahrmodus ist das Dachmodul nach der Erfindung beispielsweise Teil eines Fahrerassistenzsystems.

Das im Sinne der Erfindung ausgebildete Dachmodul stellt in integrierter Weise ein Fahrzeugdach dar, in dem Komponenten aufgenommen sind, die zum autonomen bzw. teilautonomen Fahren des betreffenden Fahrzeugs erforderlich sind. Das Dachmodul, in dem eine Vielzahl funktionaler Elemente integriert ist, kann als kompakte Baueinheit auf Seiten eines Fahrzeugherstellers zur Ausbildung eines Fahrzeugdachs mit einer Fahrzeugkarosserie bzw. einem Fahrzeugrohbau verbunden werden. Das Dachmodul kann insbesondere auch funktionale Elemente umfassen, die bei bisher bekannten Kraftfahrzeugen im Bereich eines Rückspiegels angeordnet sind und das Sichtfeld für Insassen des betreffenden Fahrzeugs einschränken.

Der Umfeldsensor, mit dem das Dachmodul nach der Erfindung versehen ist, kann grundsätzlich in vielfältiger Weise ausgebildet sein und insbesondere einen LiDAR-Sensor, einen Radar-Sensor, einen optischen Sensor, wie eine Kamera, und/oder dergleichen umfassen. LiDAR-Sensoren arbeiten vorzugsweise in einem Wellenlängenbereich von 905 nm oder auch von etwa 1550 nm. Eine als Umfeldsensor genutzte Kamera kann im Wellenlängenbereich sichtbaren Lichts und/oder im Infrarotbereich arbeiten.

Das Dachmodul nach der Erfindung ist insbesondere bei einem Personenkraftwagen einsetzbar, kann aber auch bei einem Nutzfahrzeug, wie einem Lieferwagen oder einer LKW-Zugmaschine ein Fahrzeugdach bilden oder Teil eines Fahrzeudachs sein.

Die Dachhaut des Dachmoduls nach der Erfindung kann einstückig oder mehrstückig ausgebildet sein. Das Blendenelement, das das Sensormodul übergreift und den Dachrahmen zumindest bereichsweise verblendet, kann in einstückiger Weise Bestandteil der Dachhaut sein oder auch ein separates Dachhautelement sein. Denkbar ist es aber auch, dass das Blendenelement ein separates Bauteil ist, das mit angrenzenden Dachhautbereichen verbunden ist, beispielsweise über Rastmittel, Schrauben und/oder Klebemittel. Eine Dichtung zwischen dem Blendenelement und den angrenzenden Dachhautbereichen kann das Eindringen von Spritzwasser und Feuchtigkeit in das Dachmodul verhindern. Bei einer mehrteiligen Dachhaut gehen die Außenseiten der einzelnen Dachhautelemente zweckmäßigerweise bündig ineinander über, so dass sich eine harmonische Dachaußenseite ausbildet.

Das Blendenelement bzw. die Dachhaut hat vorzugsweise einen Sensordurchsichtsbereich, durch den der Umfeldsensor die Fahrzeugumgebung erfasst. Der Sensordurchsichtsbereich ist zweckmäßigerweise für die von dem Umfeldsensor genutzten Wellenlängen transparent. Insbesondere ist der Sensordurchsichtsbereich so ausgelegt, dass Signale des Umfeldsensors durchtreten können, die in einem Wellenlängenbereich zwischen 300 nm und 2000 nm liegen.

Das Blendenelement, das das Sensormodul zumindest bereichsweise übergreift, hat bei dem Dachmodul nach der Erfindung eine Wölbung, die mit der Wölbung bzw. Bombierung von herkömmlichen Fahrzeugdächern korrespondiert, und in Dachquerrichtung und/oder Dachlängsrichtung eine Wölbung mit einem Krümmungsradius zwischen 1000 mm und 10000 mm, insbesondere zwischen 2000 mm und 5000 mm. Entsprechend kann sich die Wölbung des Blendenelements in Dachquerrichtung und/oder in Dachlängsrichtung über die Erstreckung verändern.

Um das Gesamtgewicht des Dachmoduls nach der Erfindung niedrig zu halten, ist das Blendenelement bei einer bevorzugten Ausführungsform ein Leichtbauelement, welches vorzugsweise ein Kunststoffverbundbauteil und/oder ein Kunststoffspritzgießbauteil umfasst oder auch ist. Beispielsweise umfasst das Blendenelement eine Wabenstruktur, die von faserverstärkten Polyurethanschichten begrenzt ist. Im Fall eines Kunststoffspritzgießbauteils kann das Blendenelement aus einem Polycarbonatwerkstoff oder einem sonstigen geeigneten Kunststoff hergestellt sein.

Der Dachrahmen des Dachmoduls nach der Erfindung, der karosseriefest montierbar ist und mindestens ein Rahmenquerteil und zwei sich in Dachlängsrichtung erstreckende Rahmenlängsteile umfasst, ist als Träger für das Sensormodul ausgelegt. Hierzu ist das Rahmenquerteil ein Rahmenvorderteil, auf dem der Umfeldsensor angeordnet ist. Das Blendenelement ist dann eine Frontblende, die das Rahmenvorderteil über seine gesamte Breite überspannt und ein- oder mehrteilig ausgebildet sein kann. Das Blendenelement ist in diesem Falle Bestandteil eines vorderen Windlaufs des betreffenden Fahrzeugs, der einen oberen, sich in Fahrzeugquerrichtung erstreckenden Rahmenschenkel eines Windschutzscheibenrahmens bildet.

Damit das Dachmodul nach der Erfindung im Bereich der Sensormodule flach bauen kann, kann der Dachrahmen in diesen Bereichen jeweils einen abgesenkten Aufnahmeabschnitt haben, auf dem das Sensormodul montiert ist.

Das Sensormodul kann ein Trägerblech aufweisen, über das es an dem Dachrahmen montiert ist. Das Trägerblech dient vorzugsweise zur Aufnahme und Befestigung mehrerer Umfeldsensoren, die zur Erfassung der Fahrzeugumgebung eingesetzt werden, und/oder auch von weiteren Funktionselementen der Sensorik, wie einer Heizeinrichtung und/oder einer Kühleinrichtung für den Umfeldsensor, einer Reinigungseinrichtung, elektrischen Leitungen, Flüssigkeitsleitungen und/oder dergleichen.

Um auch die seitliche Umgebung des betreffenden Kraftfahrzeugs hinreichend gut erfassen zu können, kann an den Rahmenlängsteilen des Rahmens jeweils zumindest ein Sensor bzw. Umfeldsensor der Sensorik angeordnet sein.

Um das Dachmodul nach der Erfindung unter möglichst vielfältigen Bedingungen einsetzen zu können, kann eine Heizeinrichtung, eine Kühleinrichtung und/oder eine Reinigungsanordnung für das Sensormodul vorgesehen sein. Die Heizeinrichtung und die Kühleinrichtung und die Reinigungsanordnung können jeweils an dem Dachrahmen angeordnet sein oder auch integrierter Bestandteil des Sensormoduls selbst sein. Mit der Heizeinrichtung und der Kühleinrichtung ist gewährleistet, dass das Sensormodul bzw. der Umfeldsensor stets in einem Temperaturfenster gehalten werde kann, in dem dessen Funktionsfähigkeit optimal gewährleistet ist. Mit der Kühleinrichtung kann auch Wärme abgeführt werden, die von dem Umfeldsensor selbst erzeugt wird und den Betrieb des Umfeldsensors beeinträchtigen könnte. Das Dachmodul nach der Erfindung kann also ein Thermomanagement für das Sensormodul aufweisen.

Die Reinigungsanordnung ist insbesondere so ausgelegt, dass ein Sensordurchsichtsbereich des Blendenelements, durch den der Umfeldsensor die Fahrzeugumgebung erfasst, sauber gehalten werden kann, und als Reinigungsfluid eine Reinigungsflüssigkeit oder ein Gas nutzen. Die Reinigungsanordnung umfasst beispielsweise eine Fluiddüse, mittels der in Abhängigkeit vom Verschmutzungsgrad des Sensordurchsichtsbereichs oder auch in bestimmten zeitlichen Abständen ein Reinigungsfluid in Form eines Gases oder einer Flüssigkeit appliziert wird.

Die Reinigungsanordnung kann mit einer Vorrichtung zur Detektion des Verschmutzungsgrads des Sensordurchsichtsbereichs gekoppelt sein. Diese Detektionseinrichtung kann optische Einrichtungen oder auch Einrichtungen umfassen, die beispielsweise über das Vibrationsverhalten des Sensordurchsichtsbereichs den Verschmutzungsgrad ermitteln.

Zudem ist es vorteilhaft, wenn der Sensordurchsichtsbereich selbst neben der Reinigungsanordnung eine Heizeinrichtung aufweist, mittels der Beschlagen und Vereisen des Sensordurchsichtsbereichs verhindert werden kann.

Wenn das Dachmodul nach der Erfindung mit einer Reinigungseinrichtung und einer Kühleinrichtung ausgestattet ist, die mit einem Kühlmittel arbeitet, kann das Kühlmittel von einer Reinigungsflüssigkeit gebildet sein, die die Reinigungseinrichtung nutzt und die in einem Tank des betreffenden Fahrzeugs vorgehalten wird. Der Tank kann in dem Dachmodul ausgebildet sein.

Um zu gewährleisten, dass bei einem Dachmodul mit einem Dachöffnungssystem das Sensormodul auch bei geöffneter Dachöffnung genutzt werden kann, liegt das Deckelelement zweckmäßigerweise in seiner Öffnungsstellung außerhalb eines Erfassungsbereichs bzw. eines Signalkegels des Sensormoduls.

Das Festdachelement, das den transparenten, oberhalb eines Fahrzeuginnenraums liegenden Durchsichtsbereich bildet, übergreift vorzugsweise mit seinen Randbereichen den Dachrahmen, wobei er auch das Blendenelement für das Sensormodul bildet.

Bei einer zweckmäßigen Ausführungsform des Dachmoduls nach der Erfindung ist mindestens ein Signallicht integriert, mittels dessen ein Betriebsmodus bzw. ein Aktivierungszustand der Sensorik und damit des betreffenden Fahrzeugs anzeigbar ist. Das Signallicht kann heckseitig oder bugseitig an dem Dachmodul angeordnet sein und zumindest oben von der Dachhaut bzw. dem Blendenelement, das Bestandteil der Dachhaut ist, verblendet sein. Insbesondere ist das Signallicht ein so genanntes ADS (Autonomous Drive Signal)-Licht, das anzeigt, ob sich das betreffende Fahrzeug in einem autonomen Fahrmodus befindet.

Auch weitere Kommunikationsmittel zur Kommunikation des Fahrzeugs mit anderen Verkehrsteilnehmern können in das Dachmodul nach der Erfindung integriert sein. Beispielsweise weist das Dachmodul einen akustischen Signalgeber auf, der mit der Fahrzeugumgebung bzw. mit anderen Verkehrsteilnehmern kommuniziert und ebenfalls über einen Aktivierungszustand der Sensorik informieren kann.

Um in einem Ruhezustand, in dem die Sensorik bzw. das Sensormodul nicht genutzt wird, einen Schutz vor Umwelteinflüssen und vor Beschädigung zu bieten, kann das Blendenelement gegenüber weiteren Dachhautbereichen verstellbar sein. Denkbar ist es insbesondere, dass das Blendenelement so verstellbar ist, dass das Sensormodul bei Nichtgebrauch in einen Innenraum des Dachmoduls versenkbar ist.

Das Dachmodul nach der Erfindung umfasst vorzugsweise mindestens vier Sensormodule, die jeweils in einem Eckbereich des Dachmoduls angeordnet sind und damit das Fahrzeugumfeld zumindest nahezu vollständig erfassen können. Zusätzlich oder alternativ kann im mittleren Bugbereich oder mittleren Heckbereich des Dachmoduls ein Umfeldsensor angeordnet sein, der beispielsweise aus einer Kamera gebildet ist. Die Kamera kann eine Mono-/Multi-/Multi-Fokal- und/oder Stereo-Kamera umfassen bzw. sein. Denkbar ist es auch, dass ein Umfeldsensor an einem seitlichen Rahmenlängsholm des Dachrahmens angeordnet ist.

Der Abstand der in den Eckbereichen des Dachmoduls angeordneten Sensormodule ist abhängig von dem Typ des betreffenden Fahrzeugs. Bei einer herkömmlichen Limousine beträgt der Abstand in Dachlängsrichtung vorzugsweise 80 cm bis 150 cm. Bei einem Kombifahrzeug beträgt der Abstand der in den Eckbereichen angeordneten Sensormodule in Dachlängsrichtung vorzugsweise etwa 100 cm bis 300 cm. Bei einem Kleinfahrzeug kann der Abstand der in den Eckbereichen angeordneten Sensormodule in Dachlängsrichtung zwischen 40 cm und 120 cm liegen. Der Abstand in Dachquerrichtung kann jeweils zwischen 60 cm und 140 cm betragen. Beispielsweise liegt das Verhältnis des Abstandes zwischen den in den Eckbereichen angeordneten Sensormodulen in Fahrzeugquerrichtung zu dem Abstand zwischen den in den Eckbereichen angeordneten Sensormodulen in Fahrzeuglängsrichtung im Bereich zwischen 1 : 1 und 1: 5. Bei einem Nutzfahrzeug kann dieses Verhältnis auch zwischen 1 : 5 und 1 : 10 liegen.

Die Umfeldsensoren bzw. die Sensormodule des Dachmoduls nach der Erfindung sind vorzugsweise hinter einer von dem Blendenelement gebildeten Stufe der Dachhaut angeordnet. Eine Stirnfläche der Stufe bildet den Sensordurchsichtsbereich für den Umfeldsensor. Die Stufe des Blendenelements hat vorzugsweise eine Höhe von wenigen Zentimetern, insbesondere eine Höhe von etwa 3 cm bis 15 cm. Das Sensormodul kann auch hinter einer stark abfallenden, von dem Blendenelement gebildeten Dachlinie oder einer höckerförmigen, von dem Blendenelement gebildeten Erhebung der Dachhaut liegen.

Das Sensormodul hat vorzugsweise eine Bauhöhe, die maximal 50 cm, vorzugsweise maximal 40 cm und insbesondere maximal 30 cm beträgt.

Die Dachhaut des Dachmoduls nach der Erfindung bildet vorzugsweise auch Nichtdurchsichtsbereiche, unter denen Funktionseinrichtungen der Sensorik angeordnet sein können. Die Funktionseinrichtungen umfassen vorzugsweise elektrische Leitungen, Fluidleitungen und/oder mechanische Baugruppen, die für die Sensorik erforderlich sind. Führungsschienen, die in der Regel Bestandteil eines Dachöffnungssystems sind, können ebenfalls durch nicht transparente Bereiche der Dachhaut verblendet sein.

Der Dachrahmen des Dachmoduls nach der Erfindung, der einen in das Dachmodul integrierten Träger darstellen kann, bildet vorzugsweise eine Schnittstelle, über die das Dachmodul mit der Fahrzeugkarosserie bzw. dem Fahrzeugrohbau verbindbar ist.

Des Weiteren kann das Dachmodul nach der Erfindung eine Schnittstelle aufweisen, über die das Sensormodul des Dachmoduls mit weiteren Sensorelementen des betreffenden Fahrzeugs kommunizieren kann, die beispielsweise im Bereich eines Stoßfängers angeordnet sind und für einen autonomen Fahrbetrieb des Fahrzeugs erforderlich sind.

Das Dachmodul nach der Erfindung kann des Weiteren mindestens ein Antennenmodul und ein Funkmodem umfassen. Das Antennenmodul kann zum Empfang von Radiosignalen, Mobilfunksignalen, GPS-Signalen und dergleichen dienen und in der Art von DSRC-Patchantennen ausgebildet sein. Die Antennenmodule können insbesondere zur car-to-car-Kommunikation oder zur Kommunikation des betreffenden Fahrzeugs mit einem anderen Teilnehmer dienen. Das Antennenmodul kann ein Einlegeteil eines spritzgegossenen Kunststoffabschnitts des Dachmoduls, beispielsweise ein Einlegeteil der Dachhaut sein.

Das Dachmodul nach der Erfindung kann Bestandteil einer Dachmodulauswahl sein, die über eine gleichartige mechanische Schnittstelle zu einem Fahrzeugrohbau verfügt und aus der ein Fahrzeughersteller kundenwunschabhängig auswählen kann.

Weitere Vorteile und vorteilhafte Ausgestaltungen des Gegenstandes der Erfindung sind der Beschreibung, der Zeichnung und den Patentansprüchen entnehmbar.

Ausführungsbeispiele eines Dachmoduls nach der Erfindung sind in der Zeichnung schematisch vereinfacht dargestellt und werden in der nachfolgenden Beschreibung näher erläutert. Es zeigt:
- Figur 1: eine perspektivische Ansicht eines Fahrzeugdachs mit einem Dachmodul nach der Erfindung;
- Figur 2: einen schematischen Schnitt durch das Dachmodul nach Figur 1 entlang der Linie II-II;
- Figur 3: eine schematische Draufsicht auf ein weiteres Fahrzeugdach mit einem Dachmodul nach der Erfindung;
- Figur 4: einen schematischen Schnitt durch das Fahrzeugdach nach Figur 3 entlang der Linie IV-IV;
- Figur 5: eine Draufsicht auf ein Kraftfahrzeug mit einer weiteren Ausführungsform eines Dachmoduls nach der Erfindung;
- Figur 6: einen Schnitt durch das Dachmodul nach Figur 5 entlang der Linie VI-VI in Figur 5;
- Figur 7: einen Figur 6 entsprechenden Längsschnitt durch eine weitere Ausführungsform eines Dachmoduls;
- Figur 8: eine Vorderansicht eines Fahrzeugs mit einem Dachmodul nach der Erfindung;
- Figur 9: eine Seitenansicht des Fahrzeugs nach Figur 8;
- Figur 10: einen Schnitt durch das Dach des Fahrzeugs nach Figur 8 im Bereich eines Dachseitenholms;
- Figur 11: einen Schnitt durch das Dach des Fahrzeugs nach Figur 8 im Bereich eines vorderen Windlaufs;
- Figur 12: einen schematischen Schnitt durch ein Dachmodul mit einem Trägermodul zur Befestigung mehrerer Umfeldsensoren;
- Figur 13: eine perspektivische Ansicht des Trägermoduls nach Figur 12; und
- Figur 14: eine Draufsicht auf ein Fahrzeugdach mit einem Dachmodul nach der Erfindung, das vier Sensormodule aufweist.

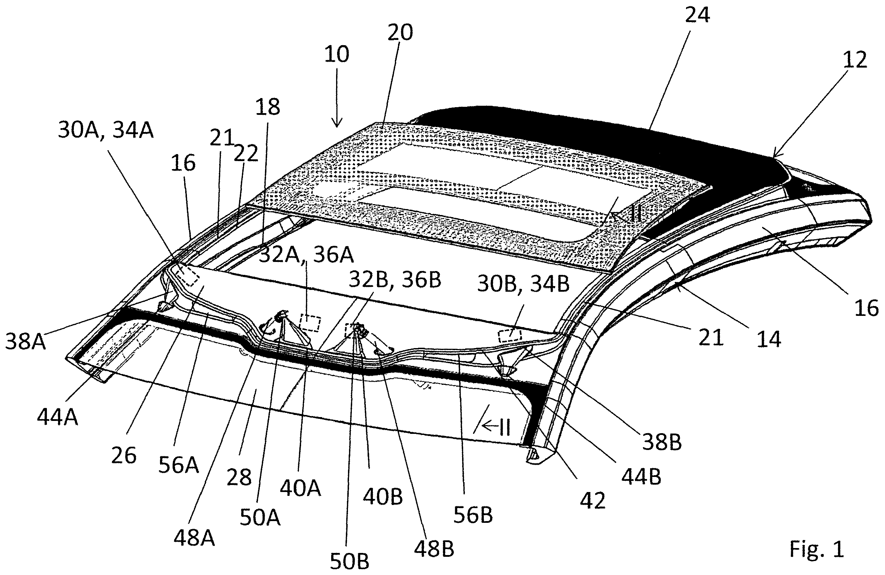

In Figur 1 ist ein Fahrzeugdach 10 eines als Personenkraftwagen ausgebildeten Kraftfahrzeugs dargestellt, welches ein Dachmodul 12 aufweist, das auf einen Fahrzeugrohbau aufgesetzt ist, welcher unter anderen bezogen auf eine vertikale Fahrzeuglängsmittelebene beidseits jeweils einen Dachseitenholm 16 umfasst.

Das Dachmodul 12 stellt ein Sensordachmodul bzw. ein Roof Sensor Module (RSM) dar, welches mit Vorrichtungen ausgestattet ist, die ein autonomes Fahren des betreffenden Kraftfahrzeugs ermöglichen.

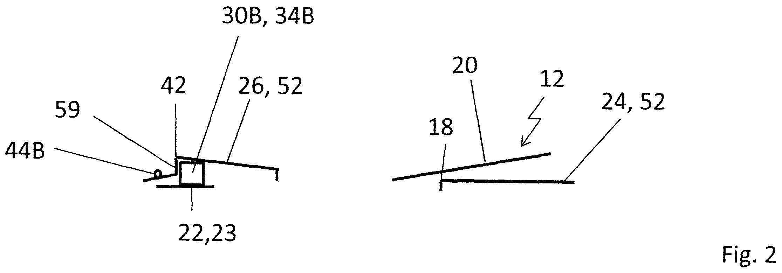

Wie Figur 1 zu entnehmen ist, umfasst das Dachmodul 12 eine Dachöffnung 18, welche mittels eines in Fahrzeuglängsrichtung verlagerbaren Deckelelements 20 wahlweise geöffnet oder verschlossen werden kann. Das Deckelelement 20 ist hierzu beidseits jeweils in einer Führungsschiene 21 gelagert, die Bestandteil eines Dachrahmens 22 ist, der eine Trägerstruktur des Dachmoduls 12 darstellt und, wie Figur 2 zu entnehmen ist, einen Dachquerholm 23 aufweist, der ein Rahmenvorderteil bildet. Die Führungsschienen 21 sind jeweils Bestandteil von Dachlängsholmen des Dachrahmens 22.

Heckseitig von der Dachöffnung 18 umfasst das Dachmodul 12 einen ein Festdachelement bildenden Dachhautabschnitt 24.

Bugseitig von der Dachöffnung 18 umfasst das Dachmodul 12 einen Dachhautabschnitt 26, welcher ein Blendenelement ist und einen vorderen Windlauf des betreffenden Kraftfahrzeuges bildet, der sich in Dachquerrichtung erstreckt und ein oberer Querschenkel eines Rahmens einer Windschutzscheibe 28 ist.

Das Dachmodul 12 ist mit einer Sensorik versehen, die ein autonomes Fahren des betreffenden Fahrzeugs ermöglicht und mehrere Sensormodule 30A, 30B, 32A und 32B aufweist, die unter dem Dachhautabschnitt 26 angeordnet sind und jeweils einen Umfeldsensor 34A, 34B, 36A bzw. 36B umfassen. Die Umfeldsensoren 34A und 34B sind jeweils als so genannter LiDAR-Sensor ausgebildet, der mit einer Wellenlänge von 905 nm und/oder 1550 nm arbeitet. Die beiden Umfeldsensoren 36A und 36B sind jeweils eine Kamera, die als Mono-/Multi-/Multi-Fokal- und/oder Stereo-Kamera ausgebildet sein kann. Die Kameras der Umfeldsensoren 36A und 36B arbeiten im Wellenlängenbereich sichtbaren Lichts und im nahen Infrarotbereich.

Der Dachhautabschnitt 26, der das Blendenelement ausbildet, weist im Bereich der Sensormodule 30A, 30B, 32A und 32B jeweils einen Durchsichtsbereich 38A, 38B, 40A bzw. 40B auf, der für Wellenlängen zwischen 200 nm und 2000 nm, insbesondere für die Wellenlängen transparent ist, die von den Umfeldsensoren 34A, 34B, 36A und 36B genutzt werden. Zudem können die Durchsichtsbereiche 38A, 38B, 40A, und 40B jeweils auch für Radarstrahlung durchlässig sein.

Das von dem Dachhautabschnitt 26 gebildete Blendenelement ist aus Kunststoff gefertigt und stellt insbesondere ein Polycarbonat-Kunststoffspritzgießteil oder ein Verbund-Leichtbauteil dar.

Der bugseitige Dachhautabschnitt 26 bildet eine Stufe 42 aus, die bezogen auf die Fahrzeuglängsmittelebene spiegelsymmetrisch ist und ausgehend von der Fahrzeuglängsmittelebene einen sich in Heckrichtung weisenden gekrümmten Verlauf hat. Die Durchsichtsbereiche 38A und 38B sind an einer Stirnseite der Stufe 42 in einem jeweiligen vorderen Eckbereich des Dachmoduls 12 angeordnet. Die Durchsichtsbereiche 40A und 40B sind nahe an der Fahrzeuglängsmittelebene symmetrisch zueinander an der Oberseite des Dachhautabschnitts 26 ausgebildet.

Um die Durchsichtsbereiche 38A, 38B, 40A und 40B sauber halten zu können, weist das Dachmodul Fluiddüsen 44A, 44B, 50A und 50B auf. Die Fluiddüsen 50A und 50B sind an ausfahrbaren Düsenstangen angeordnet. Die Fluiddüsen 44A und 44B sind bugseitig von der Stufe 42 fest an der Dachhaut 26 angeordnet. Die Fluiddüsen 44A, 44B, 50A und 50B erzeugen aus einer über entsprechende Leitungen herangeführte Reinigungsfluid, das eine Flüssigkeit oder ein Gas sein kann, jeweils einen Fluid- bzw. Sprühkegel, der bei Bedarf den betreffenden Durchsichtsbereich trifft und diesen von Verunreinigungen reinigt, im Falle eines Gases bzw. Luft auch trocknet.

Bei einer speziellen Ausführungsform arbeiten die Fluiddüsen 44A, 44B, 50A und 50B jeweils in Abhängigkeit vom Verschmutzungsgrad der Durchsichtsbereiche 38A, 38B, 40A und 40B. Der Verschmutzungsgrad kann mittels einer Detektionseinrichtung ermittelt werden, die optisch arbeitet oder das Schwingungsverhalten bzw. eine Änderung des Schwingungsverhaltens der Durchsichtsbereiche 38A, 38B, 40A und 40B als Änderung des Verschmutzungsgrads bewertet.

Die Sensormodule 30A, 30B, 32A und 32B liegen außerhalb des Bereichs, der von der Dachöffnung 18 eingenommen wird.

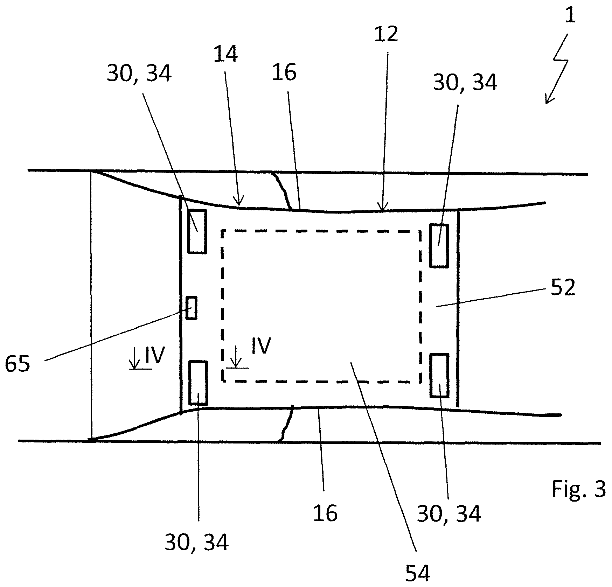

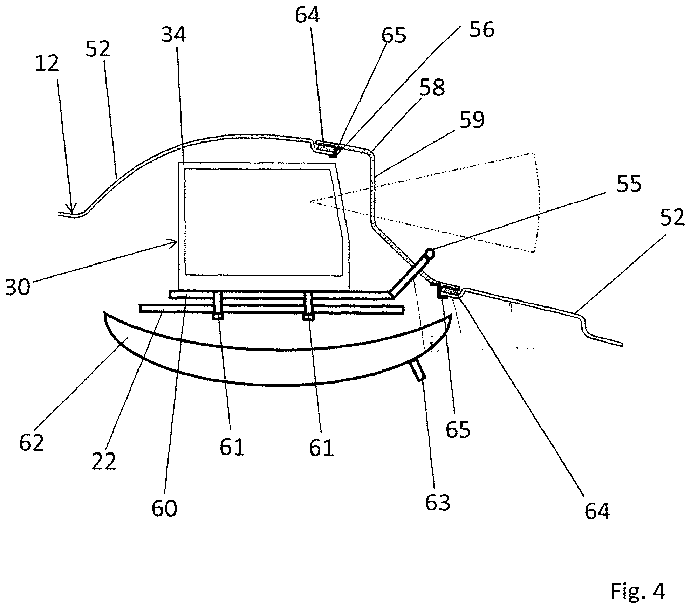

In Figuren 3 und 4 ist ausschnittsweise ein Kraftfahrzeug 1 dargestellt, welches ebenfalls als Personenkraftwagen ausgebildet ist und eine einen Rohbau darstellende Fahrzeugkarosserie 14 aufweist, auf welche ein Dachmodul 12 aufgesetzt ist. Das Dachmodul 12 bildet ein Fahrzeugdach, welches von seitlichen Längsholmen 16 begrenzt ist, die Bestandteil der Fahrzeugkarosserie 14 sind.

Das Dachmodul 12 umfasst eine Dachhaut 52, welche in einem zentralen Bereich einen transparenten Dachabschnitt 54 ausbildet, durch den Licht in einen Fahrzeuginnenraum eintreten kann. Die Dachhaut 52 ist an einem umlaufenden Dachrahmen 22 befestigt, der eine Trägerstruktur des Dachmoduls 12 und eine Schnittstelle des Dachmoduls 12 zu der Fahrzeugkarosserie bildet.

Wie schon das Dachmodul nach den Figuren 1 und 2 ist das Dachmodul 12 ein Sensordachmodul bzw. eine Roof Sensor Module (RSM), welches mit Vorrichtungen ausgestattet ist, die eine autonomes Fahren des betreffenden Kraftfahrzeuges ermöglichen. Hierzu weist das Dachmodul 12 in seinen vier Eckbereichen jeweils ein Sensormodul 30 auf, welches mit mindestens einem Umfeldsensor 34 versehen ist, mittels dessen zur Realisierung des autonomen Fahrens die Fahrzeugumgebung erfasst werden kann. Durch Auswerten der Messsignale der Umfeldsensoren 34 mittels einer Steuereinrichtung des Kraftfahrzeugs ist damit eine jeweilige Verkehrssituation ermittelbar, so dass sich das Kraftfahrzeug autonom bzw. selbstständig an die jeweiligen Verkehrssituation anpassen und entsprechend verhalten kann. Die Sensormodule 30 sind jeweils auf dem Dachrahmen 22 angeordnet und weitgehend von der Dachhaut 52 übergriffen, die ein Blendenelement bildet.

Wie schon bei der Ausführungsform nach den Figuren 1 und 2 können die Umfeldsensoren 34 in vielfältiger Weise ausgebildet sein und beispielsweise einen LiDAR-Sensor, einen Radar-Sensor, eine Kamera und/oder einen sonstigen geeigneten Sensor umfassen.

Bei der in den Figuren 3 und 4 dargestellten Ausführungsform ist die Dachhaut 52 im Wesentlichen durchgängig ausgebildet. Im Bereich der Sensormodule 30 hat die Dachhaut 52 jeweils eine Öffnung 56, die mittels einer lösbar fixierten Wartungsblende 58 verschlossen ist. Die Wartungsblende 58 bildet einen für den von dem jeweiligen Umfeldsensor 34 genutzten Wellenlängenbereich transparenten Durchsichtsbereich 59. Insbesondere ist der Durchsichtsbereich 59 für Wellenlängen zwischen 200 nm und 2000 nm transparent. Auch eine Transparenz für Radarstrahlung kann erforderlichen sein. Ein LiDAR-Sensor, der als Umfeldsensor nutzbar ist, verwendet beispielsweise eine Wellenlänge von 905 nm und/oder eine Wellenlänge von 1550 nm.

Wie Figur 4 zu entnehmen ist, sind die Umfeldsensoren 34 jeweils auf einer Trägerplatte 60 angeordnet, die mittels Schrauben 61 auf den Dachrahmen 22 verschraubt ist oder Bestandteil desselben ist. An den Trägerplatten 60 sind des Weiteren Reinigungsdüsen bzw. Fluiddüsen 54 befestigt, die die Wartungsblende 58 durchgreifen und zur Reinigung der Außenseite der Wartungsblende 58 in dem Durchsichtsbereich 59 für den Umfeldsensor 34 dienen. Um Reinigungsflüssigkeit zu den Reinigungsdüsen 44 zu führen, sind nicht näher dargestellte Zufuhrschläuche oder dergleichen vorgesehen, die an der Trägerplatte 60 und/oder dem Dachrahmen 22 befestigt sein können.

Unterhalb des Dachrahmens 22 bzw. unterhalb des Sensormoduls 30 ist eine Auffangwanne 62 angeordnet, mittels der etwaig eindringendes Spritzwasser oder dergleichen gesammelt und über eine Leitung 63 abgeführt werden kann.

Die Wartungsblende 58 liegt über eine umlaufende Dichtung 64 auf der Dachhaut 52 auf. Zudem ist die Wartungsblende 58 über Rasthaken 65 lösbar an der Dachhaut 52 fixiert.

Die Sensormodule 24, die auf dem Dachrahmen 22 angeordnet sind, liegen außerhalb des Dachdurchsichtsbereichs 54 und sind von der Dachhaut 52, die ein Blendenelement bildet, übergriffen. Das von der Dachhaut gebildete Blendenelement übergreift zudem den Dachrahmen 22 in Bereichen, die neben den Sensormodulen 24 liegen.

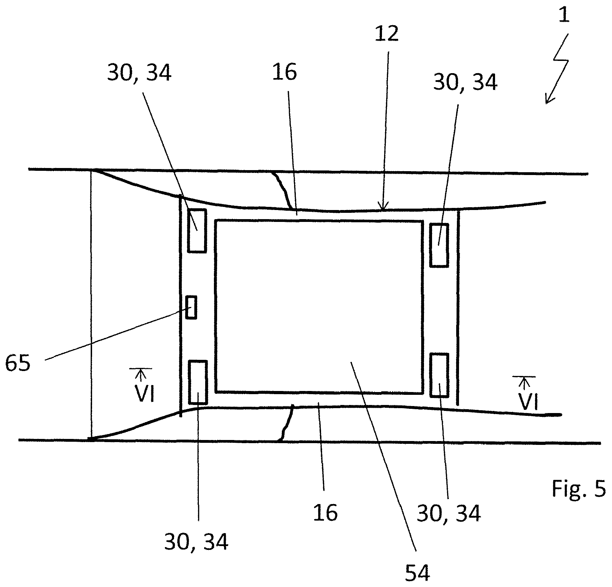

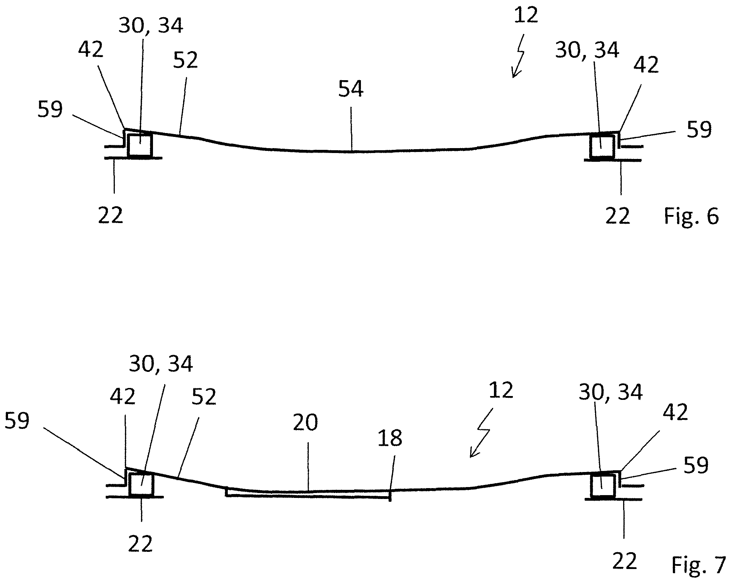

In den Figuren 5 und 6 ist ein Fahrzeugdach dargestellt, das von einem Dachmodul 12 gebildet ist, welches ebenfalls von seitlichen Dachseitenholmen 16 begrenzt ist, welche Bestandteil einer Fahrzeugkarosserie sind.

Das in Figur 6 in Alleinstellung dargestellte Dachmodul 12 ist ein Sensordachmodul bzw. ein Roof Sensor Module (RSM), welches mit Vorrichtungen ausgestattet ist, die ein autonomes Fahren des Kraftfahrzeuges ermöglichen.

Wie schon die oben beschriebenen Ausführungsformen umfasst das Dachmodul 12 nach den Figuren 5 und 6 einen Dachrahmen 22, welcher eine Trägerstruktur bildet und eine Schnittstelle des Dachmoduls 12 zu der Fahrzeugkarosserie darstellt. Zudem umfasst das Dachmodul 12 eine Dachhaut 52, welche in einem zentralen Bereich einen transparenten Durchsichtsbereich 54 ausbildet, durch den Licht in einen Fahrzeuginnenraum eintreten kann. Die Dachhaut 52 ist an dem Dachrahmen 22 fixiert.

In seinen vier Eckbereichen weist das Dachmodul 12 jeweils ein Sensormodul 30 auf, welches mit einem Umfeldsensor 34 versehen ist, mittels dessen zur Realisierung eines autonomes Fahrens des Kraftfahrzeugs die Fahrzeugumgebung erfasst werden kann. Die Sensormodule 30 sind jeweils auf dem Dachrahmen 22 angeordnet. Die Umfeldsensoren 34 der Sensormodule 30 können jeweils entsprechend den oben beschriebenen Ausführungsformen ausgebildet sein.

Die Dachhaut 52, welche den transparenten Festdachabschnitt 54 ausbildet, erstreckt sich bis in die Eckbereiche des Dachmoduls, so dass die Sensormodule 30 von der Dachhaut 54 überdeckt sind. Im vorliegenden Fall ist die Dachhaut 54 einstückig ausgebildet. Denkbar ist aber auch, dass die Dachhaut 54 aus mehreren Dachhautelementen zusammengesetzt ist.

Um den Umfeldsensoren 34 der Sensormodule 30 eine Überwachung der Fahrzeugumgebung zu ermöglichen, bildet die Dachhaut 54 im Bereich der Sensormodule 24 jeweils eine Stufe 42 aus, an deren Stirnseite ein Durchsichtsbereich 59 ausgebildet ist. Anstelle der Stufe kann auch eine leichte Erhöhung oder eine stark abfallende Dachlinie ausgebildet sein. Die Durchsichtsbereiche 59 sind für die von den Umfeldsensoren 34 genutzten Wellenlängenbereich transparent.

Durch die Anordnung der Sensormodule 30 in den Eckbereichen sind diese weit voneinander beabstandet und außerhalb des von den transparenten Festdachabschnitt gebildeten Durchsichtsbereich 54 angeordnet. Die Sensormodule 30 haben wie bei den oben beschriebenen Ausführungsformen voneinander einen Abstand, der in Dachquerrichtung bei der vorliegend gezeigten Konfiguration mindestens etwa 70 cm bis 100 cm und in Dachlängsrichtung mindestens etwa 120 cm bis 180 cm beträgt.

Zusätzlich weist das Dachmodul 12 in einem bugseitigen Bereich bezogen auf eine vertikalen Dachlängsmittelebene mittig ein sogenanntes ADS-Licht 65 auf, welches die Fahrzeugumgebung darüber informieren kann, ob sich das Kraftfahrzeug 10 in einem autonomen Fahrmodus befindet.

In Figur 7 ist eine weitere Ausführungsform dargestellt, die ein Dachmodul 12 bildet, das sich von der dem in den Figuren 5 und 6 dargestellten Dachmodul dadurch unterscheidet, dass es eine Dachöffnung 18 ausbildet, welche mittels eines Deckelelements 20, das Bestandteil eines Dachöffnungssystems ist, wahlweise geschlossen oder zumindest teilweise freigegeben werden kann. An die Dachöffnung 18 schließt sich eine Dachhaut 52 an, welche entsprechend der Ausführungsform nach den Figuren 5 und 6 in den Eckbereichen des Dachmoduls Sensormodule 30 überdeckt, die jeweils einen Umfeldsensor 34 umfassen und auf einem Dachrahmen 22 angeordnet sind, der Bestandteil des Dachmoduls 12 und eine Schnittstelle zu einer Fahrzeugkarosserie bildet.

Das Deckelelement 20 ist ein Deckelelement eines Spoilerdachs und in seiner voll geöffneten Stellung oberhalb von den heckseitig angebrachten Sensormodulen 30 und außerhalb von deren Sichtfeld angeordnet. Das Sichtfeld der Umfeldsensoren 34 dieser Sensormodule 30 wird auch in dieser Öffnungsstellung des Deckelelements 20 nicht abgeschattet.

Im Übrigen ist das Dachmodul nach Figur 7 entsprechend dem Dachmodul nach den Figuren 5 und 6 ausgebildet, weshalb der Übersichtlichkeit halber auf eine weitere konkrete Beschreibung verzichtet wird.

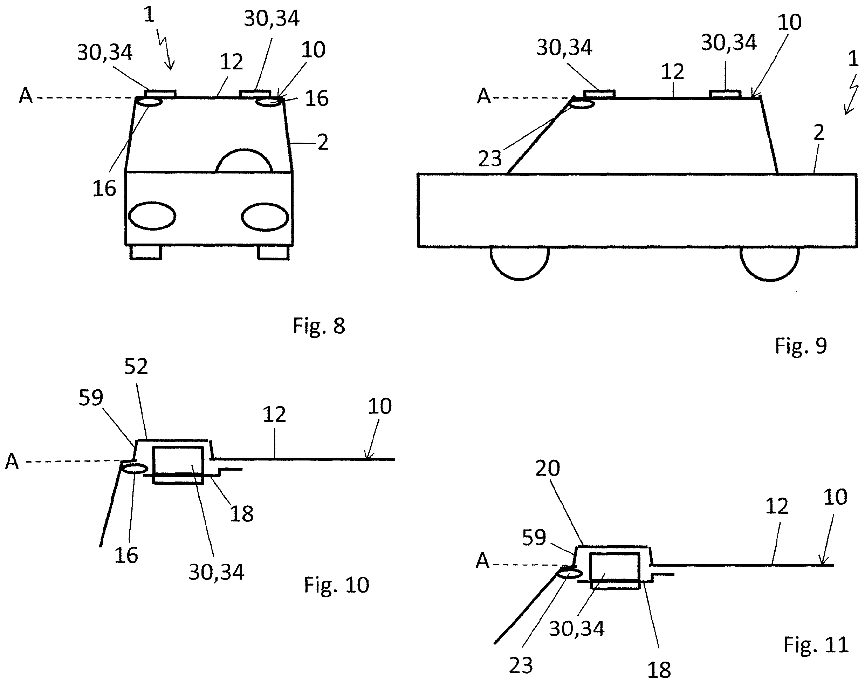

In den Figuren 8 bis 11 ist ein als Personenkraftwagen ausgebildetes Kraftfahrzeug 1 dargestellt, dass eine eine Rohbaustruktur darstellende Fahrzeugkarosserie 2 aufweist, auf der ein Fahrzeugdach 10 angeordnet ist. Das Fahrzeugdach 10 umfasst ein Dachmodul 12, das als sogenanntes Roof Sensor Module (RSM) ausgebildet ist und somit mit einer Sensorik versehen ist, die ein autonomes Fahren des Kraftfahrzeuges 1 ermöglicht.

Das Dachmodul 12, das insbesondere den Figuren 10 und 11 zu entnehmen ist, umfasst eine einen Dachrahmen 22 bildende Trägerstruktur und eine ein Festdachelement bildende, bereichsweise transparent ausgebildete Dachhaut 52, die eine Dachaußenhaut bildet.

Des Weiteren ist das Dachmodul 12 in seinen vier Eckbereichen jeweils mit einem Sensormodul 30 versehen, welches einen Umfeldsensor 34 umfasst, mittels dessen zur Realisierung des autonomen Fahrens des Kraftfahrzeuges 1 die Fahrzeugumgebung erfasst werden kann. Die Sensormodule 30 bzw. die Umfeldsensoren 34 sind entsprechend den Sensormodulen bzw. den Umfeldsensoren der oben beschriebenen Ausführungsformen ausgebildet und außerhalb eines zentralen Dachdurchsichtsbereichs angeordnet, der oberhalb eines Fahrzeuginnenraums liegt.

Im Bereich der Sensormodule 30 bildet die Dachhaut 52 jeweils eine Erhebung aus, die jeweils durch die Bauhöhe der Sensormodule 30 bedingt ist und maximal 12,5 cm beträgt. Die Bauhöhe der Sensormodule 30 ist jeweils so gewählt, dass eine obere Begrenzungsfläche ausgehend von einer Basisdachlinie A maximal etwa 12,5 cm ausgestellt sind. Die Basisdachlinie A ist eine Linie, die einer Dachlinie eines Fahrzeugdachs ohne Sensormodule entspricht, bei dem also keine sensormodulbedingten Erhebungen der Dachhaut ausgebildet sind.

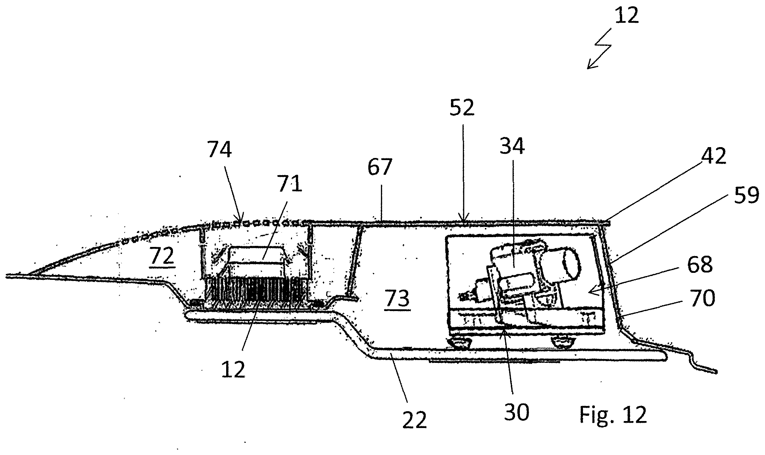

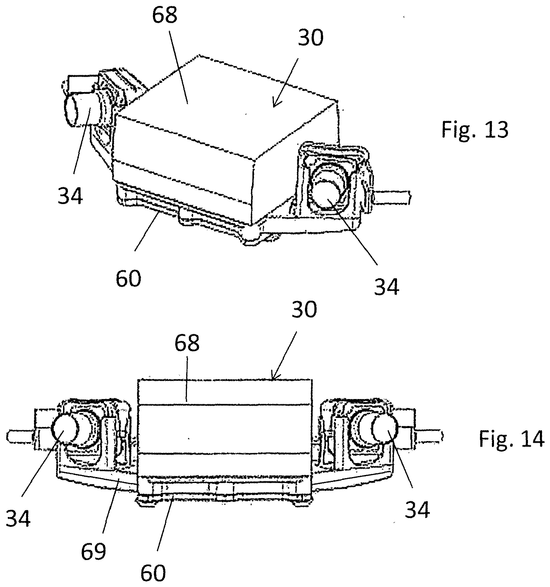

In den Figuren 12 bis 14 ist ausschnittsweise ein Dachmodul 12 zur Ausbildung eines Fahrzeugdachs dargestellt. Das Dachmodul 12 umfasst ein Flächenbauteil 67, das Bestandteil einer Dachhaut 52 ist. Das Flächenbauteil 67 der Dachhaut 52 übergreift entsprechend der Ausführungsform nach den Figuren 3 und 4 ein Sensormodul 34, das mehrere Umfeldsensoren 36 umfasst. Die Umfeldsensoren 36 sind auf einer gemeinsamen Trägerplatte 60 angeordnet, auf welcher auch eine Kühleinrichtung 68 angeordnet ist. Zudem weist das Sensormodul 34 neben den Umfeldsensoren 36, die entsprechend den Umfeldsensoren der oben beschriebenen Ausführungsform ausgebildet sein können, eine Heizeinrichtung in Form einer Heizplatte 69 auf, die zwischen der Trägerplatte 60 und den Umfeldsensoren 36 angeordnet ist und mittels der die Umfeldsensoren 36 auf einer gewünschten Betriebstemperatur gehalten werden können.

Die Kühleinrichtung 68 umfasst einen Flüssigkeitskühlkörper, der die von den Umfeldsensoren 36 erzeugte Abwärme aufnimmt und ableitet.

Die Dachhaut 52 bildet eine Stufe 42 aus, an deren Stirnseite ein Durchsichtsbereich 59 für die Umfeldsensoren 34 ausgebildet ist. Der Durchsichtsbereich 59 ist von einem Fenstereinsatz 70 gebildet.

Zudem umfasst das Dachmodul nach Figur 12 einen auf einem Kühlkörper angeordneten Kühllüfter 71, der der Kühleinrichtung 68 zugeordnet und in einem Nassbereich 72 liegt, wohingegen das Sensormodul 30 in einem Trockenbereich 73 angeordnet ist. Im Nassbereich 72 hat das Flächenbauteil 67 der Dachhaut 52 Ausnehmung bzw. Löcher 74 für den Kühllüfter.

### Bezugszeichenliste

- 1: Kraftfahrzeug
- 2: Fahrzeugkarosserie
- 10: Fahrzeugdach
- 12: Dachmodul
- 14: Fahrzeugrohbau
- 16: Dachseitenholm
- 18: Dachöffnung
- 20: Deckelelement
- 21: Führungsschiene
- 22: Dachrahmen
- 23: Dachquerholm
- 24: Dachhautabschnitt
- 26: Dachhautabschnitt
- 28: Windschutzscheibe
- 30, 30A, 30B: Sensormodul
- 32, 32A, 32B: Sensormodul
- 34, 34A, 34B: Umfeldsensor
- 36, 36A, 36B: Umfeldsensor
- 38A, 38B: Durchsichtsbereich
- 40A, 40B: Durchsichtsbereich
- 42: Stufe
- 44A, 44B: Fluiddüse
- 48A, 48B: Reinigungseinrichtung
- 50A, 50B: Fluiddüse
- 52: Dachhaut
- 54: Durchsichtsbereich
- 56: Öffnung
- 58: Wartungsblende
- 59: Durchsichtsbereich
- 60: Trägerplatte
- 61: Scheibe
- 62: Auffangwanne
- 63: Leitung
- 64: Dichtung
- 65: ADS-Licht
- 67: Flächenbauteil
- 68: Kühleinrichtung
- 69: Heizplatte
- 70: Fenstereinsatz
- 71: Kühllüfter
- 72: Nassbereich
- 73: Trockenbereich
- 74: Löcher

## Patentansprüche

1. Dachmodul für ein Kraftfahrzeug, insbesondere für einen Personenkraftwagen, umfassend eine Dachhaut (52), einen Dachrahmen (22), der karosseriefest montierbar ist und mindestens ein sich in Dachquerrichtung erstreckendes Rahmenquerteil (23) und bezogen auf eine Dachlängsmittelebene beidseits jeweils ein sich in Dachlängsrichtung erstreckendes Rahmenlängsteil (16) umfasst, sowie ein Dachöffnungssystem mit einem Deckelelement (20), das zum wahlweisen Öffnen oder Verschließen einer Dachöffnung (18) an Führungsschienen (21), die Bestandteil der Rahmenlängsteile (16) des Dachrahmens (22) sind, gegenüber dem Dachrahmen (22) in Dachlängsrichtung verlagerbar ist, und/oder ein Festdachelement, das einen transparenten Durchsichtsbereich (54) aufweist und mit dem Dachrahmen (22) starr verbunden ist, wobei das Dachmodul als Baueinheit zur Ausbildung eines Fahrzeugdachs mit einer Fahrzeugkarosserie verbindbar ist, **gekennzeichnet durch** eine Sensorik, die mindestens ein Sensormodul (30, 30A, 30B, 32A, 32B) mit mindestens einem Umfeldsensor (34, 34A, 34B, 36A, 36B) umfasst, das außerhalb der Dachöffnung (18) und/oder außerhalb des transparenten Durchsichtsbereichs (54) liegt und von einem Blendenelement übergriffen ist, das Bestandteil der Dachhaut (52) ist und den Dachrahmen (22) zumindest bereichsweise verblendet, wobei das Rahmenquerteil (23) ein Rahmenvorderteil ist und der Umfeldsensor (34, 34A, 34B, 36A, 36B) auf dem Rahmenvorderteil angeordnet ist und das Blendenelement eine Frontblende (26) ist, die das Rahmenvorderteil über seine gesamte Breite in Dachquerrichtung überspannt, wobei das Blendenelement zumindest in Dachquerrichtung und/oder Dachlängsrichtung eine Wölbung mit einem Krümmungsradius zwischen 1000 mm und 10000 mm hat.

2. Dachmodul nach Anspruch 1, **dadurch gekennzeichnet, dass** das Blendenelement einen Sensordurchsichtsbereich (59) hat, durch den der Unfeldsensor (34, 34A, 34B, 36A, 36B) die Fahrzeugumgebung erfasst.

3. Dachmodul nach Anspruch 1 oder 2, **dadurch gekennzeichnet, dass** das Blendenelement zumindest in Dachquerrichtung und/oder Dachlängsrichtung eine Wölbung mit einem Krümmungsradius zwischen 2000 mm und 5000 mm hat, wobei sich die Wölbung des Blendenelements vorzugsweise in Dachquerrichtung und/oder Dachlängsrichtung verändert.

4. Dachmodul nach einem der Ansprüche 1 bis 3, **dadurch gekennzeichnet, dass** das Blendenelement ein Leichtbauelement ist und vorzugsweise ein Kunststoffverbundbauteil und/oder ein Kunststoffspritzgießbauteil umfasst.

5. Dachmodul nach einem der Ansprüche 1 bis 4, **dadurch gekennzeichnet, dass** an den Rahmenlängsteilen jeweils mindestens ein Sensor der Sensorik angeordnet ist.

6. Dachmodul nach einem der Ansprüche 1 bis 5, **dadurch gekennzeichnet, dass** eine Heiz-, eine Kühl- und/oder eine Reinigungsanordnung für das Sensormodul (30, 30A, 30B, 32A, 32B) vorgesehen ist.

7. Dachmodul nach einem der Ansprüche 1 bis 6, **dadurch gekennzeichnet, dass** das Deckelelement (20) in seiner Öffnungsstellung außerhalb eines Erfassungsbereichs des Sensormoduls (30, 30A, 30B, 32A, 32B) liegt.

8. Dachmodul nach einem der Ansprüche 1 bis 7, **dadurch gekennzeichnet, dass** das Festdachelement mit seinen Randbereichen den Dachrahmen (22) übergreift und das Blendenelement für das Sensormodul (30, 30A, 30B, 32A, 32B) bildet.

9. Dachmodul nach einem der Ansprüche 1 bis 8, **dadurch gekennzeichnet, dass** an dem Blendenelement ein Signallicht (65) überdeckt, das einen Aktivierungszustand der Sensorik anzeigt.

10. Dachmodul nach einem der Ansprüche 1 bis 9, **dadurch gekennzeichnet, dass** ein akustischer Signalgeber vorgesehen ist, der mit einer Fahrzeugumgebung kommuniziert und/oder einen Aktivierungszustand der Sensorik angibt.

11. Dachmodul nach einem der Ansprüche 1 bis 10, **dadurch gekennzeichnet, dass** das Blendenelement gegenüber weiteren Dachhautbereichen verstellbar ist.

12. Dachmodul nach einem der Ansprüche 1 bis 11, **dadurch gekennzeichnet, dass** das Sensormodul versenkbar ist.

13. Fahrzeug, umfassend einen Fahrzeugrohbau und ein Dachmodul nach einem der Ansprüche 1 bis 12.

## Claims

1. A roof module for a motor vehicle, in particular for a passenger car, the roof module comprising a roof skin (52), a roof frame (22) configured to be installed on a vehicle body and comprising at least one transverse frame part (23) extending in the transverse roof direction and a longitudinal frame part (16) extending in the longitudinal roof direction on either side of a longitudinal center roof plane, and a roof opening system comprising a lid element (20) configured to be displaced on guide rails (21), which are part of the longitudinal frame parts (16) of the roof frame (22), relative to the roof frame (22) in the longitudinal roof direction in order to selectively open or close a roof opening (18), and/or a solid roof element having a transparent see-through portion (54) and being rigidly connected to the roof frame (22), the roof module being connectable to a vehicle body as a structural unit in order to realize a vehicle roof, **characterized by** a sensor system comprising at least one sensor module (30, 30A, 30B, 32A, 32B) which has at least one environmental sensor (34, 34A, 34B, 36A, 36B) and is located outside of the roof opening (18) and/or outside of the transparent see-through portion (54) and is covered by a cover element which is part of the roof skin (52) and covers at least part of the roof frame (22), the transverse frame part (23) being a front frame part and the environmental sensor (34, 34A, 34B, 36A, 36B) being disposed on the front frame part, and the cover element being a front cover (26) covering the front frame part across its entire width in the transverse roof direction, the cover element having a curvature having a curvature radius between 1000 mm and 10,000 mm at least in the transverse roof direction and/or the longitudinal roof direction.

2. The roof module according to claim 1, **characterized in that** the cover element has a sensor see-through portion (59) through which the environmental sensor (34, 34A, 34B, 36A, 36B) detects the vehicle environment.

3. The roof module according to claim 1 or 2, **characterized in that** the cover element has a curvature having a curvature radius between 2000 mm and 5000 mm at least in the transverse roof direction and/or the longitudinal roof direction, the curvature of the cover element changing in the transverse roof direction and/or the longitudinal roof direction.

4. The roof module according to any one of claims 1 to 3, **characterized in that** the cover element is a lightweight element and preferably comprises a plastic composite component and/or an injection-molded plastic component.

5. The roof module according to any one of claims 1 to 4, **characterized in that** at least one sensor of the sensor system is disposed on each of the longitudinal frame parts.

6. The roof module according to any one of claims 1 to 5, **characterized in that** a heating, cooling and/or cleaning assembly for the sensor module (30, 30A, 30B, 32A, 32B) is provided.

7. The roof module according to any one of claims 1 to 6, **characterized in that** the lid element (20) is located outside of a detection area of the sensor module (30, 30A, 30B, 32A, 32B) when it is in its open position.

8. The roof module according to any one of claims 1 to 7, **characterized in that** the solid roof element covers the roof frame (22) with its edge portions and forms the cover element for the sensor module (30, 30A, 30B, 32A, 32B).

9. The roof module according to any one of claims 1 to 8, **characterized in that** the cover element covers a signal light (65) indicating an activation state of the sensor system.

10. The roof module according to any one of claims 1 to 9, **characterized in that** an acoustic signaling device communicating with a vehicle environment and/or indicating an activation state of the sensor system is provided.

11. The roof module according to any one of claims 1 to 10, **characterized in that** the cover element is displaceable relative to other roof skin portions.

12. The roof module according to any one of claims 1 to 11, **characterized in that** the sensor module is retractable.

13. A vehicle comprising a vehicle body and a roof module according to any one of claims 1 to 12.

## Revendications

1. Module de toit pour un véhicule automobile, en particulier pour une voiture particulière, le module de toit comprenant une toiture (52), un cadre de toit (22) configuré pour être monté sur la carrosserie de voiture et comprenant au moins une partie transversale de cadre (23) s'étendant dans le sens transversal de la toit et une partie longitudinale de cadre (16) s'étendant dans le sens longitudinal de la toit de part et d'autre d'un plan central longitudinal de la toit, et un système d'ouverture de toit comprenant un élément de couvercle (20) configuré pour être déplacé sur des rails de guidage (21), qui font partie des parties longitudinales (16) du cadre de toit (22), par rapport au cadre de toit (22) dans le sens longitudinal de la toit afin d'ouvrir ou de fermer sélectivement une ouverture de toit (18), et/ou un élément de toit rigide fixe ayant une partie transparente (54) et étant relié de manière rigide au cadre de toit (22), le module de toit pouvant être relié à une carrosserie de voiture en tant qu'unité structurelle afin de former un toit de véhicule, **caractérisé par** un système capteur comprenant au moins un module capteur (30, 30A, 30B, 32A, 32B) qui a au moins un capteur environnemental (34, 34A, 34B, 36A, 36B) et est situé à l'extérieur de l'ouverture de toit (18) et/ou à l'extérieur de la partie transparente (54) et est recouvert par un élément de couverture qui fait partie de la toiture (52) et recouvre au moins une partie du cadre de toit (22), la partie transversale de cadre (23) étant une partie frontale de cadre et le capteur environnemental (34, 34A, 34B, 36A, 36B) étant disposé sur la partie frontale de cadre, et l'élément de couverture étant un couvercle frontal (26) recouvrant la partie frontale de cadre sur toute sa largeur dans le sens transversal de toit, l'élément de couverture ayant une courbure avec un rayon de courbure compris entre 1000 mm et 10 000 mm au moins dans le sens transversal de toit et/ou dans le sens longitudinal de toit.

2. Module de toit selon la revendication 1, **caractérisé en ce que** l'élément de couverture a une partie transparente (59) du capteur à travers laquelle le capteur environnemental (34, 34A, 34B, 36A, 36B) détecte l'environnement de la voiture.

3. Module de toit selon la revendication 1 ou la revendication 2, **caractérisée en ce que** l'élément de couverture a une courbure ayant un rayon de courbure compris entre 2000 mm et 5000 mm au moins dans le sens transversal de la toit et/ou dans le sens longitudinal de la toit, la courbure de l'élément de couverture variant dans le sens transversal de la toit et/ou dans le sens longitudinal de la toit.

4. Module de toit selon l'une quelconque des revendications 1 à 3, **caractérisé en ce que** l'élément de couverture est un élément de construction légère et comprend de préférence un composant composite plastique et/ou un composant plastique moulé par injection.

5. Module de toit selon l'une quelconque des revendications 1 à 4, **caractérisé en ce qu'**au moins un capteur du système capteur est disposé sur chacune des parties longitudinales de cadre.

6. Module de toit selon l'une quelconque des revendications 1 à 5, **caractérisé en ce qu'**un assemblage de chauffage, de refroidissement et/ou de nettoyage pour le module de capteur (30, 30A, 30B, 32A, 32B) est prévu.

7. Module de toit selon l'une quelconque des revendications 1 à 6, **caractérisé en ce que** l'élément de couvercle (20) est situé à l'extérieur d'une zone de détection du module de capteur (30, 30A, 30B, 32A, 32B) lorsqu'il est dans sa position ouverte.

8. Module de toit selon l'une quelconque des revendications 1 à 7, **caractérisé en ce que** l'élément de toit rigide fixe recouvre le cadre de toit (22) avec ses zones de bord et forme l'élément de couverture pour le module de capteur (30, 30A, 30B, 32A, 32B).

9. Module de toit selon l'une quelconque des revendications 1 à 8, **caractérisé en ce que** l'élément de couverture recouvre un signal lumineux (65) indiquant un état d'activation du système capteur.

10. Module de toit selon l'une quelconque des revendications 1 à 9, **caractérisé en ce qu'**un dispositif de signalisation acoustique communiquant avec un environnement de voiture et/ou indiquant un état d'activation du système capteur est prévu.

11. Module de toit selon l'une quelconque des revendications 1 à 10, **caractérisé en ce que** l'élément de couverture est déplaçable par rapport aux autres parties de toiture.

12. Module de toit selon l'une quelconque des revendications 1 à 11, **caractérisé en ce que** le module de capteur est rétractable.

13. Véhicule comprenant une caisse de voiture et un module de toit selon l'une quelconque des revendications 1 à 12.
